# NEUE EUROPÄISCHE PATENTSCHRIFT

(11) **EP 0 163 884 B2**
(45) Veröffentlichungstag und Bekanntmachung des Hinweises auf die Entscheidung über den Einspruch: **15.12.1999**
(45) Hinweis auf die Patenterteilung: 31.10.1990
(21) Anmeldenummer: 85104770.4
(22) Anmeldetag: 19.04.1985
(51) Int. Cl.: B29C 45/82

(54) **Hydraulische Steuereinrichtung für die Einspritzeinheit einer Kunstoff-Spritzgiessmaschine**
Hydraulic control device for the injection unit of a plastic injection-moulding machine
Dispositif de commande hydraulique pour l'unité d'injection d'une machine d'injection de matières plastiques

(30) Priorität: 16.05.1984 DE 3418141
(43) Veröffentlichungstag der Anmeldung: 11.12.1985
(73) Patentinhaber: ROBERT BOSCH GMBH, 70442 Stuttgart (DE)
(72) Erfinder: Tittmann, Egon, Dipl.-Ing., D-7250 Leonberg (DE); Walter, Heinz, Ing.(grad.), D-7255 Rutesheim (DE)

(56) Entgegenhaltungen:
- DD-A- 41 656
- DE-A- 2 523 303
- DE-A- 3 404 927
- FR-A- 2 312 359
- FR-A- 2 472 969
- PATENT ABSTRACTS OF JAPAN, Band 7, Nr. 120 (M-217)[1265], 25. Mai 1983; & JP-A-58 38 134 (DAIKIN KOGYO K.K.) 05-03-1983
- SOVIET INVENTIONS ILLUSTRATED, Sektion P/Q, Woche K17, 6. Juni 1983, Zusammenfassung Nr. 41135, Derwent Publications Ltd, London, GB; & SU-A-937 201 (FORGE PRESS EQUIP) 23-06-1982
- E. Tittmann, "Steuern und regeln mit Proportionalventilen", Fluid, September 1983, Seiten 32 bis 35

## Beschreibung

Die Erfindung geht aus von einer hydraulischen Steuereinrichtung nach der Gattung des Anspruchs 1.

Bei einer derartigen bekannten hydraulischen Steuereinrichtung ist für die Steuerung der Hydraulikdrücke in einem Spritzzylinder während der Spritzdruck-, Nachdruck- und Staudruckphase in einem Steuerkreis ein einziges, programmsteuerbares Drucksteuerventil vorgesehen. Von Nachteil bei dieser Steuereinrichtung ist, daß für die Steuerung des Spritzzylinders mehrere als eine Baueinheit ausgebildete Hauptstufen erforderlich sind. So sind in einer von einer Pumpenleitung zum Spritzzylinder führenden Zuflußleitung eine Druckminderpatrone sowie eine Wegepatrone und in einer vom Spritzzylinder zum Tank führenden Abflußleitung eine Druckbegrenzungspatrone geschaltet. Die zahlreichen Hauptstufen bei dieser Steuereinrichtung führen zu einem erheblichen baulichen Aufwand und begünstigen auch nicht eine kompakte Bauweise des hydraulischen Leistungsteiles. Darüberhinaus eignet sich diese Steuereinrichtung auch nicht zur Umstellung von einer Steuerung auf eine Regelung. Der Betrieb ist aus diesem Grunde nicht besonders wirtschaftlich (DE-AS-25 23 303).

Weiterhin ist eine ähnliche Steuereinrichtung bekannt geworden, die unter anderem mit Regelkreisen für die Parameter Einspritzgeschwindigkeit und Einspritzdruck arbeitet. Nachteilig ist hierbei, daß die Einrichtung nur für eine Regelung des Spritzprozesses ausgebildet ist und ein teures, elektrohydraulisches, mehrstufiges Servoventil benötigt. Im übrigen gilt das bereits oben Gesagte, daß nämlich die Einrichtung immer noch nicht leistungsoptimal betrieben werden kann.

Ferner ist aus der Zeitschrift "Fluid", September 1983, S. 32 bis 35, insbesondere S. 34, Bild 6 und 7 eine hydraulische Steuereinrichtung für die Einspritzeinheit einer Kunststoff -Spritzgießmaschine zum Steuern unterschiedlicher Drücke bekannt, bei der ein Spritzzylinder und das diesen steuernde Einbauventil einen geschlossenen Regelkreis bilden und ein geschwindigkeitsabhängiges Signal des Spritzzylinders und ein hubabhängiges Signal des Einbauventils zur Steuerung der Durchflußposition des Einbauventils benutzt werden. Zur Druckmittelversorgung für den geregelten Einspritzprozeß nach Bild 7 ist eine vereinfacht dargestellte Regelpumpe vorgesehen, die in den Regelprozeß nicht einbezogen ist. Ferner ist in Bild 7 ein den Spritzzylinder in Rotation versetzender Hydromotor nicht dargestellt. Diese Einrichtung arbeitet daher noch nicht leistungsoptimal.

### Vorteile der Erfindung

Die erfindungsgemäße Steuereinrichtung mit den kennzeichnenden Merkmalen des Anspruchs 1 hat demgegenüber den Vorteil, daß der Volumenstrom der programmierten Einspritzgeschwindigkeit und der Drehzahl des Hydromotors angepaßt ist. Der Antrieb wird dadurch energiesparend. Das ist von besonderer Bedeutung beim sogenannten Plastifizieren des Kunststoffs als derjenigen Funktion mit der längsten Zykluszeit.

Weiterhin ist es von Vorteil, diese Einrichtung bei erhöhtem Volumenstrombedarf mit einem Hydraulikspeicher auszurüsten. Für den Ladevorgang des Hydraulikspeichers wird die Verstellpumpe dabei als Konstantpumpe betrieben. Durch Verwen dung eines Druckbegrenzers für die Verstellpumpe ergibt sich der Vorteil einer verlustarmen Druckregelung der Pumpe und der automatischen Volumenstromanpassung im geregelten Spritzprozeßsystem.

### Zeichnung

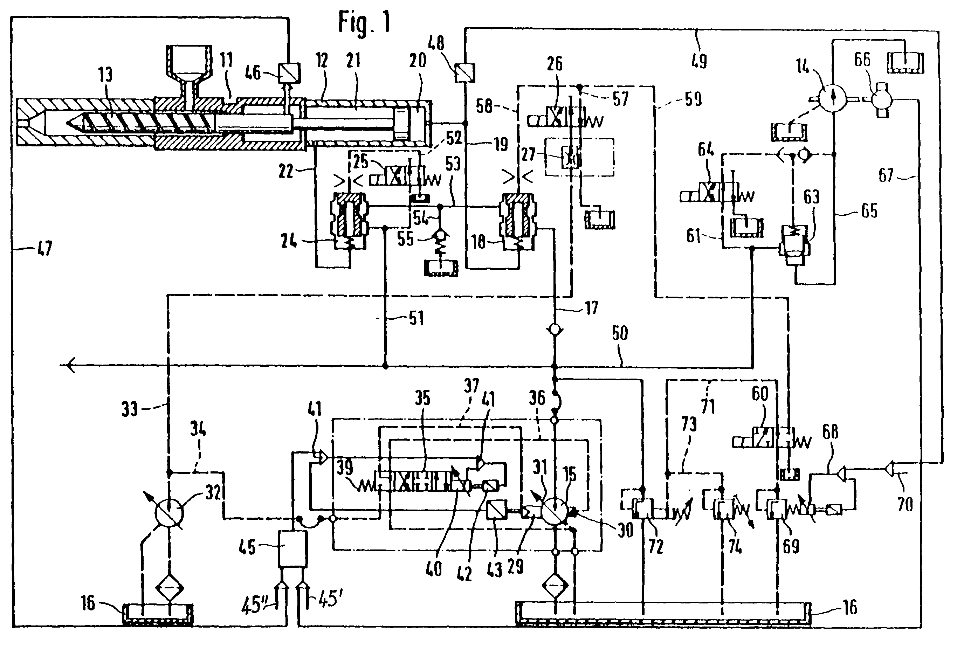

Ausführungsbeispiele zur Erläuterung der Erfindung sind in der Zeichnung dargestellt und in der nachfolgenden Beschreibung näher erläutert. Es zeigen
Figur 1 eine erste Steuereinrichtung in schematischer Darstellung, die jedoch nicht Bestandteil der Erfindung ist und nur zur Erläuterung des patentierten Gegenstandes beibehalten wird, während die
Figur 2 eine zweite erfindungsgemäße Steuereinrichtung zeigt.

### Beschreibung der Ausführungsbeispiele

Die hydraulische Steuereinrichtung dient zur Versorgung einer Einspritzeinheit 11 einer nicht näher gezeichneten Kunststoff-Spritzgießmaschine. Die Einspritzeinheit 11 weist in an sich bekannter Weise einen Spritzzylinder 12 für die Längsbewegung einer Plastifizierschnecke 13 sowie einen Hydromotor 14 für deren Drehbewegung auf.

Zum Bereitstellen des erforderlichen Druckmittels dient eine verstellbare Pumpe 15, die Druckmittel aus einem Tank 16 ansaugt und dieses in eine Förderleitung 17 verdrängt. Diese führt zu einem 3/2-Einbauventil 18, von wo eine Leitung 19 zum einen Druckraum 20 des Spritzzylinders führ. Das Einbauventil 18 dient zur Druckmittelversorgung des Druckraums 20. Vom zweiten, als Ringraum ausgebildeten Druckraum 21 führt eine Leitung 22 ebenfalls zu einem 3/2-Einbauventil 24. Zur Steuerung des Ventiles 24 dient ein elektromagnetisch betätigbares Steuerventil 25, zur Steuerung des Einbauventils 18 dient ein ebensolches Steuerventil 26, dem ein Strombegrenzungsventil 27 vorgeschaltet ist. Der Einfachheit halber sind für die eben benannten vier Ventile nicht alle Leitungen beschrieben, da aus der Zeichnung leicht erkennbar. Das Einbauventil 24 dient zur Druckmittelversorgung des Druckraumes 21.

Die Pumpe 15 hat in bekannter Weise zwei einander diametral gegenüberliegende Stellkolben 29, 30, die auf deren Verstellglied 31 einwirken. Der Stellkolben 30 hat eine wesentlich kleinere Fläche als der Stellkolben 29. Zur Bereitstellung des für die Verstellung der Pumpe notwendigen Druckmittels dient eine Hilfspumpe 32, die ebenfalls Druckmittel aus dem Tank 16 ansaugt und dieses in zwei Leitungen 33, 34 verdrängt. Die Leitung 34 führt zu einem 4/4-Regelventil 35, welches die Steuerung des Druckmittels zu den Stellkolben 29, 30 übernimmt. Zu diesem Zweck führt vom Stellkolben 30 eine Leitung 36 und vom Stellkolben 29 eine Leitung 37 zum Regelventil 35. Dieses wird entgegen der Kraft einer Feder durch einen Elektromagneten 40 betätigt, der über eine elektronische Steuereinrichtung 45 angesteuert wird. Mit dem Steuerventil 35 ist ein Weggeber 42 gekoppelt, der die Stellung des Steuerventils bzw. dessen Steuerschiebers registriert. Der Stellkolben 29 ist ebenfalls mit einem Weggeber 43 versehen, der seine Werte einem Verstärker 41 eingibt. Dem elektronischen Steuergerät 45 werden über ein am Spritzzylinder 11 angeordnetes Wegmeßsystem 46 die Stellung des Spritzzylinders (Istwert) über eine elektrische Leitung 47 und durch einen Tachogenerator 66 über eine Leitung 67 die Ist-Drehzahl des Hydromotors 14 zurückgeführt. Das Steuergerät 45 hat einen Regelverstärker, der die Sollwerte über die Programmeingänge 45' und 45'' für den Hydromotor 14 und den Spritzzylinder 12 mit den entsprechenden Istwerten vergleicht und ausregelt.

An die Förderleitung 17 ist eine Leitung 50 angeschlossen. von der eine Zweigleitung 51 einerseits zum Einbauventil 24 und andererseits zum Steuerventil 25 führt. Dieses ist über eine Steuerleitung 52 mit dem Einbauventil verbunden. Weiterhin führt vom Einbauventil 24 eine Leitung 53 zum Einbauventil 18; an die Leitung 53 ist über ein Rückschlagventil 55 eine zum Tank 16 führende Leitung 54 angeschlossen. Die von der Hilfspumpe 32 kommende Leitung 33 endet am Steuerventil 26. An dieses ist eine Leitung 57 angeschlossen, von der einerseits eine Leitung 58 abzweigt und zum Einbauventil 18 führt und andererseits eine Leitung 59 angeschlossen ist, die zu einem elektromagnetisch betätigten Wegeventil 60 führt.

An die Leitung 50 ist eine Leitung 61 angeschlossen, die einerseits zu einer 2-Wegepatrone 63 führt, andererseits zu einem elektromagnetisch betätigbaren Vorsteuerventil 64. Mit dessen Hilfe kann die Patrone 63 in Steuerstellung gebracht werden. Vom Auslaß der Patrone 63 führt eine Leitung 65 zum Hydromotor 14. Dieser ist mit einem Tachogenerator 66 gekuppelt, von dem die elektrische Leitung 67 zum elektronischen Steuergerät 45 führt. Am Wegeventil 60 endet die Leitung 59.

Vom Wegeventil 60 führt eine Leitung 71 zu einem Druckventil 72, wodurch eine Verbindung zum Druckregelventil 69 hergestellt ist. Sein Druckraum ist über eine Leitung 73 mit einem Vorsteuerventil 74 verbunden. Von dem an den Druckraum 20 des Spritzzylinders angeschlossenen Druckaufnehmer 48 führt eine elektrische Leitung 49 zu einer elektrischen Signalverarbeitung 68, der über eine elektronische SollwertEingabe 70 die jeweiligen Prozeßdrücke im Druckraum 20 am Spritzzylinder eingegeben werden (Spritzdruck, Staudruck, Nachdruck), und zwar über eine Elektronik 68. Diese signalisiert die genannten Drücken an ein Proportional-Druckregelventil 69.

Die Steuereinrichtung arbeitet wie folgt: Für das Einspritzen von Kunststoff durch den Spritzzylinder werden die Wegeventile 60 und 26 geschaltet. Dadurch wird das Einbauventil 18 in eine solche Stellung gebracht, daß Druckmittel von der Leitung 17 über die Leitung 19 in den Druckraum 20 fließt. Der Spritzzylinder 12 wird dadurch mit der vorgewählten Einspritzgeschwindigkeit ausgefahren (Füllphase). Der Abfluß von Druckmittel aus dem Druckraum 21 erfolgt über das Einbauventil 24 sowie die Leitungen 53, 54 und das Rückschlagventil 55 zum Behälter. Nach Beendigung des Füllvorgangs folgt die quasi statische Phase. Mit Erreichen des am Druckregelventil 69 durch die Elektronik programmierten Sollwert-Spritzdrucks wird das Einbauventil 18 in Druckregelstellung gebracht. Das für die Druckregelung erforderliche Druckmittel zum Einstellen des Einbauventils 18 wird über das Stromregelventil 27 zugemessen. Das Einbauventil 18 nimmt dann eine entsprechende Durchflußstellung ein. Der Druckaufnehmer 48 gibt ein Signal für die Änderung von Spritzdruck auf Nachdruck. Dieses Signal bewirkt außerdem über das elektronische Steuergerät 45 eine Verstellung des Regelventils 35, das nun die Pumpe 15 so einstellt, daß sie gerade den Druckmittelstrom erbringt, der für die Nachdrucksteuerung erforderlich ist. Der Systemdruck steht über das Vorsteuerventil 74 auf maximalem Systemdruck.

Durch Betätigen des Vorsteuerventils 64 wird die Patrone 63 geöffnet, so daß Druckmittel aus der Leitung 50 über die Leitung 65 auch zum Hydromotor 14 fließen kann. Dessen Drehzahl wird vom Tachogenerator über die elektrische Leitung 67 ebenfalls in das elektronische Steuergerät 45 zurückgeführt. Auch hierdurch wird wieder die Stellung des Regelventils 35 derart beeinflußt, daß Soll- und Istwert der Drehzahl ausgeregelt werden.

Beim Plastifizieren kann die Drehzahl des Hydromotors 14 durch die Pumpe 15 stufenlos verstellt werden. Die gleichzeitige Staudruckregelung wird ebenfalls vom Einbauventil 18 ausgeführt. Die Staudruckwerte sind stufenlos von Null bar an einstellbar. Das System ist mit maximalen Druck am Druckbegrenzungsventil 72 über das Vorsteuerventil 74 abgesichert. Beim Plastifizieren wird durch die äußere Kraft der Schmelze der Spritzzylinder 12 nach rechts bewegt. Der dabei aus dem Druckraum 20 abfließende Druckmittelstrom wird mit dem Einbauventil 18 zwecks Homogenität der Schmelze auf den vorwählbaren Staudruck gebracht. Der aus dem Einbauventil 18 abfließende Druckmittelstrom wird durch das Rückschlagventil 55 geringfügig vorgespannt. Dadurch wird eine Nachfüllung des Druckraums 21 am Spritzzylinder über das Einbauventil 24 sichergestellt. Dieses wird im übrigen beim Spritzvorgang mit Hilfe des Steuerventils 25 so eingestellt, daß Druckmittel aus dem Druckraum 21 abfließen kann. Es ist für die Funktion Dekompression eingesetzt. d.h. dann wenn die Schnecke 13 zurückgesetzt wird.

Aus Obigem ist zu erkennen, daß die Pumpe 15 als Stellglied im geschlossenen Regelkreis mit dem Spritzzylinder 12 für Positionieren und Einspritzgeschwindigkeit (Regeldruck) und mit dem Hydromotor für gleichbleibende Drehzahl unabhängig von Lastdruck und anderen Störgrößen arbeitet.

Entsprechend den Anforderungen an die Dynamik des Spritzprozesses sind folgende Einsatzfälle für die Verstellpumpe möglich:

### 1. Fall:

Die Pumpe 15 fördert einen Volumenstrom, der geringfügig größer ist als für die programmierte Einspritzgeschwindigkeit erforderlich. Der Systemdruck wird über das Wegeventil 60 und das Differenzdruckventil dem Lastdruck angepaßt.

### 2. Fall:

Die Verstellpumpe ist voll ausgeschwenkt und wirkt als Konstantpumpe. Mit der Steuerleitung 71 und über das Wegeventil 60 und das Differenzdruckventil ist ein vorgesteuertes 3-Wege-Stromregelsystem verwirklicht.

### 3. Fall:

Die Verstellpumpe ist voll ausgeschwenkt und wirkt als Konstantpumpe. Die Restdruckmittelmenge fließt über das Druckventil 72 unter Maximaldruck zum Tank.

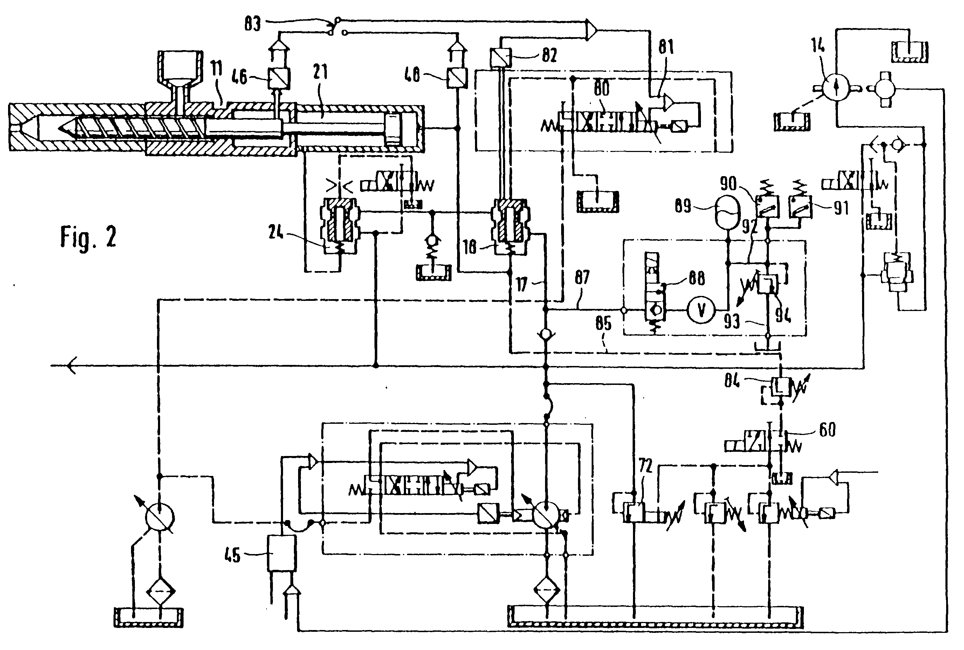

Das Ausführungsbeispiel nach Figur 2 unterscheidet sich vom vorigen dadurch, daß hier der Regelkreis gebildet wird aus dem Spritzzylinder 11 und dem Einbauventil 18, die einen geschlossenen Regelkreis bilden. Außerdem ist noch eine zusätzliche Druckmittelquelle vorhanden, falls eine besonders große Druckmittelmenge notwendig ist. Gleiche Teile wie beim vorigen Ausführungsbeispiel sind mit denselben Ziffern bezeichnet. Waren bei jenem für die Steuerung des Einbauventils 18 das Steuerventil 26 und das Strombegrenzungsventil 27 nötig, so übernimmt diese Funktion hier ein elektromagnetisch betätigbares Proportionalventil 80 mit elektrischer Signaleingabe 81. Diesem wird ein Signal von einem Weggeber 82 zugeleitet, der mit dem Einbauventil in Wirkverbindung steht, d.h. die Stellung des Einbauventils wird über den Weggeber 82 der elektrischen Eingabe signalisiert. Das Wegmeßsystem 46 am Spritzzylinder 11 steht nun nicht mit dem elektronischen Steuergerät 45 in Wirkverbindung, sondern je nach Stellung eines Schalters 83 mit dem Druckaufnehmer 48 bzw. der elektrischen Signaleingabe 81. Für eine zusätzliche Steuerung des Einbauventils 18 sind außerdem ein Differenzdruckventil 84 und das Wegeventil 60 des vorherigen Ausführungsbeispiels notwendig. Von dem an das Wegeventil 60 angeschlossenen Differenzdruckventil 84 führt eine Steuerleitung 85 zum Einbauventil 18. Dem elektronischen Steuergerät 45 wird nun nicht die Geschwindigkeit des Spritzzylinders eingegeben, sondern der Sollwert für den Förderstrom sowie - wie zuvor - die Solldrehzahl des Hydromotors 14.

Für die Bereitstellung einer zusätzlichen Druckmittelmenge verläuft von der Förderleitung 17 eine Leitung 87 über ein Steuerventil 88 zu einem Druckspeicher 89 mit zusätzlichem Druckmittelvolumen. Außerdem sind zwei Druckschalter 90 und 91 vorgesehen, die an eine Leitung 92 engeschlossen sind. In einer parallel dazu verlaufenden Leitung 93 ist ein Druckbegrenzungsventil 94 angeordnet.

Bei diesem Ausführungsbeispiel wirkt das Einbauventil 18 als Stellglied im Lage-Geschwindigkeits- und Druckregelkreis. Entsprechend den Anforderungen an die Dynamik des Spritzprozesses sind folgende Einsatzfälle für die Pumpe 15 möglich.

### 1. Fall:

Die Pumpe fördert einen Volumenstrom, der geringfügig größer ist als für die programmierte Einspritzgeschwindigkeit erforderlich. Der Systemdruck wird durch die Steuerleitung 85 über das Wegeventil 60 und das Differenzdruckventil 84 dem Lastdruck angepaßt.

### 2. Fall:

Die Pumpe 15 erbringt ihre voile Fordermenge und wirkt damit als Konstantpumpe. Durch Zusammenwirken des Steuerventils 60 und des Differenzdruckventils 84 über die Steuerleitung 85 ist ein vorgesteuertes 3-Wege-Stromregelsystem verwirklicht, durch welches das Einbauventil 18 entsprechend geregelt wird.

### 3. Fall:

Die Pumpe 15 erbringt wiederum ihre Hochstfördermenge und wirkt als Konstantpumpe. Die überschüssige Restmenge fließt über das Druckbegrenzungsventil 72 zum Behälter.

Bei großem Volumenstrombedarf kann die Spritzorozeßregelung mit Hilfe des Druckspeichers 81 zusatzlich versorgt werden. Ist dieser durch das elektromagnetisch betätigbare Steuerventil 88 zugeschaltet und erreicht das Speichersystem den Höchstarbeitsdruck, dann wird durch das Signal des Druckschalters 90 die Verstellpumpe auf Minimalfördermenge und der Druck am Vorsteuerventil 69 auf Mindestdruck eingesteilt werden. Ist dieser im Druckspeicher erreicht. dann wird über das Drucksignal des Druckschalters 91 die Pumpe 15 wieder auf maximale Fördermenge eingestellt.

Der geschlossene Regelkreis aus Pumpe 15, Hydromotor 14 bei Funktion Plastifizieren mit der längsten Zykluszeit bleibt als energiesparender Antrieb unverändert erhalten.

Mit der beschriebenen Steuereinrichtung wird der Förderstrom der programmierten Einspritzgeschwindigkeit und der Drehzahl des Hydromotors angepaßt. Dadurch wird der Antrieb energiesparend.

## Patentansprüche

1. Hydraulische Steuereinrichtung für die Einspritzeinrichtung einer Kunststoff-Spritzgießmaschine zum Steuern unterschiedlicher Hydraulikdrücke, die auf einen Spritzzylinder einwirken, mit einem in der Zuflußleitung zum Spritzzylinder angeordneten, eine Druckminderfunktion ausübenden Einbauventil (18), das von einem Steuerkreis mit wenigstens einem proportional verstellbaren Druckregelventil (69) vorsteuerbar ist und mit die Größe des Druckmittelstroms in der Zuflußleitung beeinflussenden, verstellbaren Steuermitteln, sowie einem den Spritzzylinder (12) in Rotation versetzenden Hydromotor (14), die von einer verstellbaren, servogesteuerten Pumpe (15) mit Druckmittel versorgt werden, dadurch gekennzeichnet, daß das Einbauventil (18) und der Spritzzylinder (12) einen geschlossenen Regelkreis bilden, daß vom Spritzzylinder ein elektrisches Signal über dessen Verstellgeschwindigkeit und vom Einbauventil (18) ein elektrisches Signal über dessen Durchflußposition gebildet werden, die einer elektronischen Signaleingabe (81) eines elektromagnetisch betätigbaren Proportionalventils (80) eingegeben werden, welches die Durchflußposition des Einbauventils (18) bestimmt, und daß vom Hydromotor (14) ein elektrisches Signal über dessen Drehzahl einem elektronischen Steuergerät (45) eingespeist wird, das auch Sollwerte für die Drehzahl des Hydromotors (14) und für den Förderstrom der Pumpe (15) erhält und daß diese am Steuergerät (45) eingespeisten Werte für die Verstellung eines Regelventils (35) für die Regelung der als Stellglied arbeitenden Pumpe (15) dienen, welche in einem elektrohydraulischen Lageregelkreis (43, 41, 35, 29) liegt.

2. Hydraulische Steuereinrichtung nach Anspruch 1, dadurch gekennzeichnet, daß ein Differenzdruckventil (84) vorgesehen ist, von dem durch willkürliche Betätigung eines Steuerventils (60) die Durchflußposition des Einbauventils (18) beeinflußbar ist.

## Claims

1. Hydraulic control device for the injection means of a plastic injection-moulding machine, for the control of different hydraulic pressures acting on an injection cylinder, with a built-in valve (18) which is arranged in the inflow line to the injection cylinder and performs a pressure-reducing function and which is capable of being pilot-controlled by a control circuit having at least one proportionally adjustable pressure-regulating valve (69), and with adjustable control means influencing the magnitude of the pressure-medium stream in the inflow line, as well as with a hydraulic motor (14) setting the injection cylinder (12) in rotation, the said control means and the said hydraulic motor being supplied with pressure medium by an adjustable servo-controlled pump (15), characterized in that the built-in valve (18) and the injection cylinder (12) form a closed control loop, in that the injection cylinder forms an electrical signal relating to its speed of adjustment, and the built-in valve (18) forms an electrical signal relating to its throughflow position, the said signals being entered in an electronic signal input (81) of an electro-magnetically actuable proportional valve (80) which determines the throughflow position of the built-in valve (18), and in that the hydraulic motor (14) feeds an electrical signal relating to its rotational speed to an electronic control unit (45) which also receives desired values for the rotational speed of the hydraulic motor (14) and for the delivery of the pump (15), and in that these values fed in at the control unit (45) serve for adjusting a regulating valve (35) for regulating the pump (15) which operates as an actuator and which is located in an electrohydraulic position-regulating circuit (43, 41, 35, 29).

2. Hydraulic control device according to Claim 1, characterized in that a differential-pressure valve (84) is provided, by which the throughflow position of the built-in valve (18) is capable of being influenced as a result of the random actuation of a control valve (60).

## Revendications

1. Dispositif de commande hydraulique pour l'unité d'injection d'une machine de moulage par injection de matières plastiques, afin de commander différentes pressions hydrauliques qui agissent sur un cylindre d'injection, avec un distributeur intégré (18) exerçant une fonction de réduction de la pression et disposé sur la canalisation d'amenée au cylindre d'injection, ce distributeur étant susceptible d'être précommandé par un circuit de commande avec au moins une soupape de réglage de la pression (69) susceptible d'être réglée proportionnellement, et avec des moyens de commande réglables, influençant l'importance du, courant d'agent de pression dans la canalisation d'amenée, ainsi qu'avec un moteur hydraulique (14) mettant en rotation le cylindre d'injection (12), l'alimentation en agent de pression étant assurée par une pompe réglable (15) servocommandée, dispositif de commande hydraulique caractérisé en ce que
- le distributeur (18) et le cylindre d'injection (12) constituent un circuit de réglage fermé, tandis qu'à partir du cylindre d'injection est formé un signal électrique en ce qui concerne la vitesse de déplacement de ce cylindre et qu'à partir du distributeur (18) est formé un signal électrique en ce qui concerne la position de passage de ce distributeur, ces signaux étant appliqués à une entrée électronique de signaux (81) d'une vanne électromagnétique proportionnelle (80) qui détermine la position de passage du distributeur (18),
- à partir du moteur hydraulique (14) un signal électrique dépendant de la vitesse de rotation de ce moteur, est appliqué à un appareil électronique de commande (45) qui reçoit également des valeurs de consigne pour le courant d'alimentation de la pompe (15) et la vitesse de rotation du moteur hydraulique (14), et
- ces valeurs fournies à l'appareil de commande (45) sont utilisées pour changer la position d'une vanne de réglage (35) pour la régulation de la pompe (15), travaillant comme un vérin régulé en boucle fermée de position (43, 41, 35, 29).

2. Dispositif de commande hydraulique selon la revendication 1,
caractérisé en ce qu'
il est prévu une soupape de pression différentielle (84) par laquelle la position de passage du distributeur (18) est susceptible d'être influencée par l'actionnement volontaire d'une vanne de réglage (60).
